# FASCICULE DE BREVET EUROPEEN

(11) **EP 0 502 754 B1**
(45) Date de publication et mention de la délivrance du brevet: **01.06.1994**
(21) Numéro de dépôt: 92400195.1
(22) Date de dépôt: 24.01.1992
(51) Int. Cl.: F01N 3/34, F01P 1/10, F02P 13/00

(54) **Dispositif d'insufflation d'air dans le circuit d'échappement d'un moteur à combustion interne comportant un composant du circuit d'allumage**
Vorrichtung zum Einblasen von Luft in die Abgasanlage einer Brennkraftmaschine mit Zündeinrichtungskomponente
Device for the insufflation of air into the exhaust conduit of an internal combustion engine incorporating an ignition circuit component

(30) Priorité: 07.03.1991 FR 9102757
(43) Date de publication de la demande: 09.09.1992
(73) Titulaire: AUTOMOBILES PEUGEOT, 75116 Paris (FR); AUTOMOBILES CITROEN, 92200 Neuilly-sur-Seine (FR)
(72) Inventeur: Sergent, André, F-91550 Paray Vieille Poste (FR); Schmit, Jean-Marc, F-91160 Longjumeau (FR)
(74) Mandataire: Obolensky, Michel

(56) Documents cités:
- EP-A- 0 480 787
- US-A- 4 706 639
- US-A- 4 727 717
- PATENT ABSTRACTS OF JAPAN vol. 8, no. 26 (M-273)(1463) 3 Février 1984 & JP-A-58 183 815 (YAMAHA) 27 Octobre 1983
- PATENT ABSTRACTS OF JAPAN vol. 13, no. 25 (M-787)(3373) 20 Janvier 1989 & JP-A-63 235 666 (YAMAHA) 30 Septembre 1988

## Description

La présente invention concerne un dispositif d'insufflation d'air dans le circuit d'échappement d'un moteur à combustion interne.

La demande de brevet EP-A-0.480.787, faisant partie de l'état de la technique défini à l'article 54, paragraphe 3, de la Convention sur le Brevet Européen, décrit un dispositif du type comportant pour chaque cylindre un clapet anti-retour dont la partie aval est reliée au conduit d'échappement par un conduit d'alimentation en air formé dans une enceinte agencée au voisinage de la culasse du moteur.

Le dispositif d'insufflation d'air décrit dans ce document est d'un encombrement très réduit, résiste aux contraintes mécaniques dues au phénomène de vibration et son prix de revient est faible.

Dans l'agencement du dispositif, il est prévu que les clapets anti-retour sont placés entre les bougies d'allumage des différents cylindres, chaque bougie étant coiffée d'un connecteur qui la relie à un circuit d'allumage du moteur.

Afin de simplifier la conception du système et du circuit d'allumage, on a proposé d'utiliser par ailleurs un agencement associant une bobine d'allumage à une ou plusieurs bougies.

Pour faciliter le montage de l'ensemble sur le moteur, il est proposé de disposer les bobines et les circuits électriques associés dans un boîtier. Toutefois, un des problèmes majeurs rencontré dans ce type d'agencement est lié au refroidissement des bobines qui dégagent une chaleur importante à l'intérieur du boîtier.

EP-A-0.480.787 décrit également un dispositif d'insufflation d'air du type précité, comportant un carter constituant avec son couvercle une enceinte étanche formant un conduit d'alimentation en air. Le carter comprend, d'une part, des premiers trous dans lesquels les bobines d'allumage sont fixées de manière étanche, et d'autre part, des seconds trous reliés à la partie amont des clapets anti-retour.

Cependant, le montage de ce dispositif et le refroidissement des bobines d'allumage ne donnent pas entière satisfaction.

Afin de remédier à ces inconvénients, l'invention propose un dispositif d'insufflation d'air dans le circuit d'échappement d'un moteur à combustion interne, comprenant un conduit d'alimentation en air formé dans une enceinte agencée au voisinage de la culasse du moteur, et, pour chaque cylindre, un clapet anti-retour interposé entre le conduit d'alimentation et le circuit d'échappement, l'enceinte comprenant un carter, fermé hermétiquement par un couvercle, comportant une embouchure d'entrée d'air et des trous de sortie reliés aux clapets anti-retour pour constituer le conduit d'alimentation, le carter comportant de plus des cloisons transversales délimitant au moins un logement, dans lequel est agencé un composant du circuit d'allumage et de distribution du moteur, et des canaux périphériques entourant au moins partiellement ce logement et dans lesquels circule l'air traversant le carter de manière à participer au refroidissement du composant.

Selon d'autres caractéristiques de l'invention :
- le composant du circuit d'allumage est une bobine électrique d'alimentation d'au moins une bougie du moteur ;
- les cloisons délimitent également des passages pour des fils de raccordement électrique de la bobine à au moins une bougie.

D'autres caractéristiques et avantages de l'invention apparaîtront à la lecture de la description détaillée qui va suivre pour la compréhension de laquelle on se reportera aux dessins annexés dans lesquels :
- La figure 1 est une vue de dessus du dispositif d'insufflation d'air réalisé conformément aux enseignements de l'invention sans son couvercle de fermeture ;

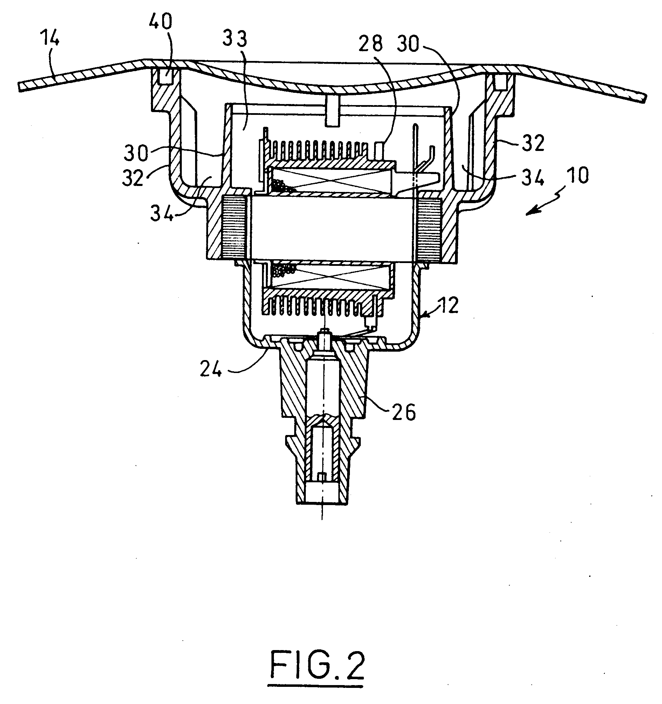

- la figure 2 est une vue en section selon la ligne 2-2 de la figure 1 ; et
- la figure 3 est une vue en section selon la ligne 3-3 de la figure 1.

Pour connaître le principe général de conception d'un dispositif d'insufflation d'air, on pourra se reporter au contenu de la demande de brevet EP-A-0.480.787.

Le dispositif 10 illustré sur les figures est prévu pour l'insufflation d'air dans un moteur à combustion interne à quatre cylindres en ligne.

Le dispositif est pour l'essentiel constitué par une enceinte comportant un carter 12 fermé hermétiquement à sa partie supérieure par un couvercle 14.

Le carter présente une forme générale parallélépipédique rectangle. Une de ses petites faces latérales 16 comporte une embouchure d'entrée d'air 18 sur laquelle est raccordée une conduite 20 provenant du filtre à air du moteur (non représenté).

L'enceinte constituée par le carter 12 et le couvercle 14 permet d'insuffler l'air pénétrant par l'embouchure 18 dans chacun des cylindres du moteur. Pour cela, l'air qui circule dans l'enceinte 12 en sort par quatre trous de sortie 22 dont chacun est relié au conduit d'échappement d'un des cylindres du moteur avec interposition d'un clapet anti-retour non représenté.

La face inférieure 24 du carter 12 comporte également quatre portions en saillie vers l'extérieur 26 dont chacune est percée pour recevoir l'extrémité supérieure de la bougie d'allumage correspondante (non représentée) d'un des cylindres du moteur.

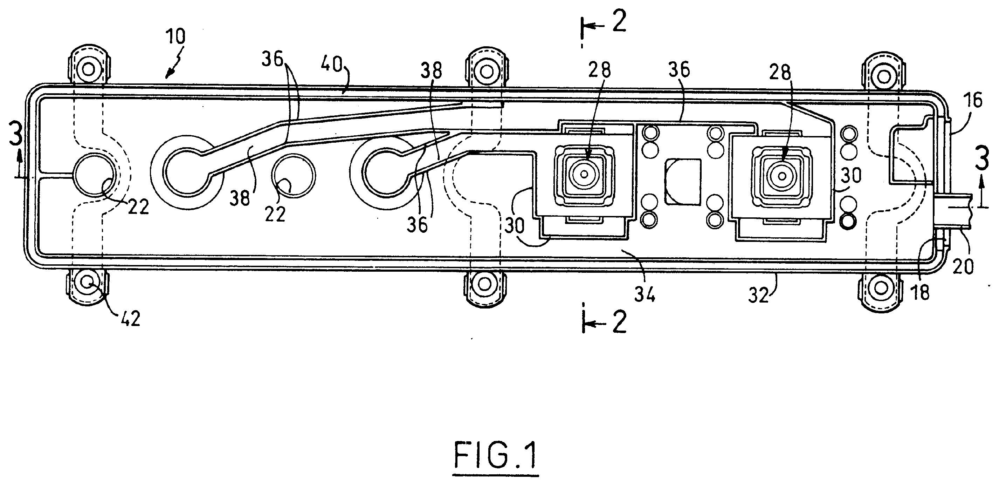

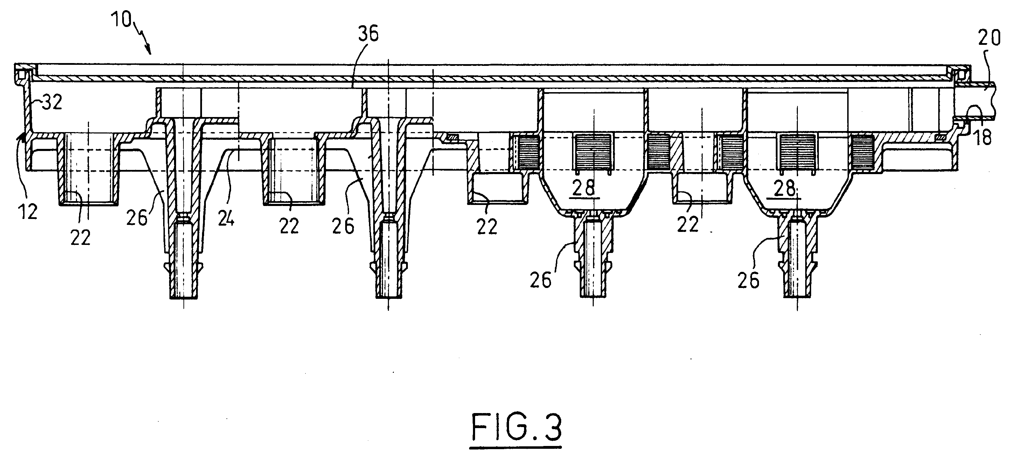

Les deux parties en saillie 26 associées aux deux cylindres de droite, en considérant les figures 1 et 3, reçoivent chacune une bougie qui est raccordée directement à une bobine d'allumage 28.

La bobine 28 est montée directement dans un logement formé dans le fond du carter et qui est délimité par une cloison transversale périphérique 30.

Outre sa fonction de réceptacle pour la bobine 28, la cloison transversale 30 délimite un espace interne 33 qui, après la mise en place de la bobine 28 peut être rempli d'une résine d'isolation électrique.

Le carter 12 est délimité latéralement par sa paroi périphérique 32 qui, en coopération avec les cloisons transversales 30 qui entourent les bobines 28, forment et délimitent des canaux périphériques 34 qui entourent au moins partiellement les bobines 28 afin que l'air d'insufflation qui circule à travers l'enceinte participe au refroidissement des bobines.

Les cloisons transversales 30 sont en outre complétées par d'autres portions de cloisons complémentaires 36 qui délimitent des passages 38 qui sont prévus pour recevoir des fils (non représentés) de raccordement électrique de chacune des deux bobines 28 à chacune des bougies associées aux deux cylindres de gauche, en considérant les figures 1 et 3, du moteur à combustion interne.

Chaque bobine 28 assure donc l'alimentation de deux bougies, c-est-à-dire directement de la bougie située immédiatement en-dessous de la bobine et, indirectement, d'une bougie située à gauche par l'intermédiaire d'un fil de raccordement passant dans un passage 38.

Le bord supérieur de la cloison latérale 32 du carter 12 comporte une gorge 40 qui reçoit un joint d'étanchéité qui participe à la fermeture hermétique du carter par le couvercle 14.

Lorsque les bobines 28 et les fils de raccordement des bobines aux bougies ont été mis en place respectivement dans leurs logements et dans les passages 38, on procède ensuite au remplissage des logements et passages par de la résine d'isolation.

Conformément à l'invention, on a ainsi constitué un dispositif d'insufflation d'air qui peut être fixé sur le moteur par des vis reçues dans les pattes de fixation 42 du carter 12, dont la compassité est conservée, qui intègre une partie des composants du circuit d'allumage tout en assurant un refroidissement efficace de certains de ces composants, en l'occurence des bobines 28.

## Revendications

1. Dispositif d'insufflation d'air (10) dans le circuit d'échappement d'un moteur à combustion interne, comprenant un conduit d'alimentation en air formé dans une enceinte agencée au voisinage de la culasse du moteur, et, pour chaque cylindre, un clapet anti-retour interposé entre le conduit d'alimentation et le circuit d'échappement, l'enceinte comprenant un carter (12), fermé hermétiquement par un couvercle (14), comportant une embouchure d'entrée d'air (18, 20) et des trous (22) de sortie reliés aux clapets anti-retour pour constituer le conduit d'alimentation, le carter (12) comportant de plus des cloisons transversales (30, 36) délimitant au moins un logement, dans lequel est agencé un composant (28) du circuit d'allumage et de distribution du moteur, et des canaux périphériques (34) entourant au moins partiellement ce logement et dans lesquels circule l'air traversant le carter (12) de manière à participer au refroidissement du composant (28).

2. Dispositif selon la revendication 1, caractérisé en ce que le composant du circuit d'allumage est une bobine électrique (28) d'alimentation d'au moins une bougie du moteur.

3. Dispositif selon la revendication 2, caractérisé en ce que lesdites cloisons (36) délimitent également des passages (38) pour des fils de raccordement électrique de la bobine (28) à au moins une bougie.

## Patentansprüche

1. Vorrichtung zum Einblasen von Luft in die Abgasanlage einer Brennkraftmaschine, die eine Luftzufuhrleitung, die in einem in der Nähe des Zylinderkopfes des Motors angeordneten Gehäuse gebildet ist, sowie für jeden Zylinder ein zwischen die Zufuhrleitung und die Abgasanlage eingesetztes Rückschlagventil aufweist, wobei das Gehäuse einen Kasten (12) enthält, der durch einen Deckel (14) hermetisch verschlossen ist und eine Lufteinlaßöffnung (18, 20) sowie Auslaßlöcher (22) aufweist, die mit den Rückschlagventilen verbunden sind, um die Zufuhrleitung zu bilden, wobei der Kasten (12) außerdem transversale Trennwände (30, 36), die wenigstens einen Aufnahmesitz begrenzen, in dem ein Bauelement (28) der Zünd- und Verteilerschaltung des Motors angeordnet ist, sowie Umfangskanäle (34) aufweist, die diesen Aufnahmesitz wenigstens teilweise umgeben und in denen die durch den Kasten (12) sich bewegende Luft zirkuliert, so daß sie zur Kühlung des Bauelements (28) beiträgt.

2. Vorrichtung gemäß Anspruch 1, dadurch gekennzeichnet, daß das Bauelement der Zündschaltung eine Spule (28) zur elektrischen Versorgung wenigstens einer Zündkerze des Motors ist.

3. Vorrichtung gemäß Anspruch 2, dadurch gekennzeichnet, daß die Trennwände (36) außerdem Durchlässe (38) für die elektrischen Verbindungsdrähte der Spule (28) mit wenigstens einer Zündkerze begrenzen.

## Claims

1. A device (10) for insufflation of air into the exhaust system of an internal combustion engine, comprising an air supply conduit formed in an enclosed space provided in the vicinity of the cylinder head in the engine, and a non-return valve, for each cylinder, interposed between the supply conduit and the exhaust system, the enclosed space comprising a casing (12) hermetically sealed by means of a lid (14) and having an opening (18, 20) for entry of air, and exit holes (22) connected to the non-return valves to form the supply conduit, the casing (12) additionally comprising transverse partitions (30, 36) delimiting at least one housing, in which there is provided a component (28) of the ignition and timing system of the engine, and peripheral channels (34) at least partially surrounding the said housing, in which channels the air passing through the casing (12) circulates in such a manner as to take part in cooling the component (28).

2. A device in accordance with claim 1, **characterised in that** the component of the ignition system is an electric coil (28) to supply at least one spark plug of the engine.

3. A device in accordance with claim 2, **characterised in that** the said partitions (36) also delimit passages (38) for electrical wires connecting the coil (28) to at least one spark plug.
